Europäisches Patentamt

European Patent Office

Office européen des brevets

(19)

(11) **EP 1 061 364 A2**

(12) **EUROPEAN PATENT APPLICATION**

(43) Date of publication:
**20.12.2000 Bulletin 2000/51**

(51) Int. Cl.⁷: **G01N 29/26**, G01N 29/10,
G01N 29/22, G21C 17/017

(21) Application number: **00111099.8**

(22) Date of filing: **05.06.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **18.06.1999 US 335574**

(71) Applicant:
**Siemens Power Corporation
Richland, WA 99352 (US)**

(72) Inventor:
**McClelland, Richard, G.
Richland, WA 99352 (US)**

(74) Representative:
**Kahlhöfer, Hermann, Dipl.-Phys. et al
Patent- und Rechtsanwälte,
Bardehle,Pagenberg,Dost,Altenburg,Geissler,Is
enbruck
Uerdinger Str. 5
40474 Düsseldorf (DE)**

(54) **Method for the inspection of steam generator tubing utilizing nonaxisymmetric guided waves**

(57) A method for ultrasonic inspection of steam generator tubing utilizing nonaxisymetric ultrasonic guided waves.

**EP 1 061 364 A2**

Printed by Xerox (UK) Business Services
2.16.7 (HRS)/3.6

**Description**

Field Of The Invention

The present invention relates generally to a method for ultrasonic inspection of steam generator tubing and more particularly to a method utilizing nonaxisymetric ultrasonic guided waves for the detection of damage, flaws, or corrosion of the tubing within a steam generator, and even more particularly to a method of introducing nonaxisymetric ultrasonic guided waves into the tubing and detecting a reflected wave from the steam generator tubing.

Background Of The Invention

The majority of applications where steam is produced as a primary source of power, whether it be for heating, power generation, or other uses, the steam generation system consists of a primary system for super heating water and a secondary system in which the steam is generated. The primary system normally operates at greatly elevated temperatures and pressures for reasons of economy and efficiency. The bridge between the primary system and the secondary steam supply system is the steam generator.

The steam generators function is to conduct thermal energy from the super heated primary system in order to produce steam in the secondary system. The steam generator is a pressure vessel and normally consists of a series of straight or "U"-shaped tubes, sometimes in the hundreds, within the steam generator which are connected to the secondary system. The tubes are normally stainless steel or other non-corroding metal, depending on the application. These tubes are grouped in bundles and supported within the steam generator by supports sometimes called tube sheets. Super heated water from the primary system is circulated around the tubing bundles connected to the secondary system. Water is also circulated through the tubing connected to the secondary system. In this way the water in primary and secondary systems are separated. Thermal energy is conducted from the primary to the secondary causing the water in the secondary system to turn into steam.

In most instances this isolation is critical for efficient operation, and in the case of pressurized light water nuclear reactors, this provides a radiological boundary preventing radioactive contamination of the turbine and associated piping.

In normal operation steam generator tubing periodically fails due to corrosion, physical damage, or fretting. To determine which tubes are failed, inspection of all tubes within the steam generator is required. Current inspection methods include visual, eddy current, and ultrasonic. Since the tubes are normally in bundles and have various lengths (lengths of 24 feet are common) and geometry (U shaped), inspection must be performed from the inside of the tube.

Visual inspection requires the use of special optical instruments such as a borescope to inspect the inside of the tubing. The data obtained from visual inspection is very limited, defect size, especially depth, is difficult to accurately estimate, and defects initiated from the tube outside diameter that are not completely through the tube wall are impossible to detect.

The most common inspection used in industry is eddy current. In this inspection technique, a small eddy current coil is inserted in the tube. The coil is then continuously rotated around the tube inside diameter as the coil is moved along the full length of the tube. The eddy current technique can detect and locate virtually all types of tube damage both on the inside and well as the outside of the tube. The disadvantages of this system are its complexity and speed. The system required to rotate the coil, move the coil along the full length of the tube, while maintaining accurate positional data is complex and the amount of data generated is extremely large and data analysis time consuming.

Two methods of ultrasonic inspection have also been successfully used. The first is similar to eddy current in that the ultrasonic transducer is rotated around the tube inside diameter, or the ultrasonic wave is reflected off a rotating "mirror", as the ultrasonic transducer is moved along the length of the tube. The second uses ultrasonic guide waves. The use of this method permits axial inspection of the entire length of the tube without transducer movement from the tube opening. However, this technique has the basic limitation of not being able to provide circumferential defect or material condition information due to the homogeneity of the guided wave. An additional limitation is that the transducer cannot be easily moved along the length of the tube, as would be required for inspecting beyond a large defect. To generate axisymetrical guided waves, whether the guided wave is generated by a magnetorestrictive or comb transducer, the transducer must be in full radial contact with the tube inside diameter making movement impractical.

Summary Of The Invention

In accordance with the present invention, a method of inspecting a steam generator tube within a steam generator to detect damage, flaws, corrosion, wall thinning, or breach is disclosed, comprising the steps of (a) placing in an open end of the steam generator tube and in contact with an inner wall of the steam generator tube a first partially loaded, tone burst activated, comb ultrasonic transducer, (b) transmitting a first nonaxisymetric ultrasonic wave into the steam generator tube using the first partially loaded transducer, and (c) detecting a first reflected ultrasonic wave from the steam generator tube which reflected ultrasonic wave is indicative of a variation from a predetermined steam generator tube wall thickness.

Brief Description Of The Drawings

Figure 1 depicts the excitation of guided waves using an oblique incidence, longitudinal wave transducer on a plexiglass wedge;

Figure 2A is a graphical representation of the phase velocity excitation zone when guided waves are induced by oblique incidence, longitudinal wave excitation;

Figure 2B is a graphical representation of the phase velocity excitation zone when guided waves are induced by a periodic distribution of normal excitations with the spatial period equaling the wavelength of the excited mode, the ["comb" method];

Figure 3 depicts the comb type excitation and the relationship between spatial period and wavelength;

Figure 4 shows a block diagram of a first embodiment of the present invention;

Figure 5 shows a block diagram of another embodiment of the present invention.

Detailed Description Of The Invention

The present invention provides a method which permits the rapid inspection and testing of steam generator tubing within a steam generator to detect the presence of defects within the tubing, outside diameter fretting marks caused by tube movement between the tube and the tube sheet, and wall thinning caused by corrosion. The present invention permits rapid inspection of the tubing without requiring the inspection transducer to be moved through the complete length of the tube.

In accordance with the present invention, a method is provided for transmitting a nonaxisymetric ultrasonic wave into steam generator tubes using a partially loaded transducer and using swept frequency tone burst excitation to move the peak intensity of the sound field (the most useful for defect detection) both axially and circumferentially along the full length of the tube without the requirement for moving the ultrasonic transducer both axially and circumferentially along the full length of the tube to accomplish the inspection.

Additionally, in accordance with the present invention, a method of further controlling the shape and axial and circumferential position of the maximum amplitude of the transmitted sound field utilizing multiple partially loaded ultrasonic transducers by the use of both swept frequency tone burst excitation and time delayed, or phased, triggering between the ultrasonic transducers.

A guided wave is an ultrasonic wave induced in an object with such properties that permit the wave to stay within the boundaries of the material with little or no leakage to either surface. The production of guided waves in an object is controlled by the proper selection of transducer frequency, transducer incidence angle, test object material velocity, and material wall thickness. Since the wave is attenuated only by the material impedance, the waves can travel long distances with little attenuation.

There are several ways of inducing guided waves in an object. The two most used are oblique incidence angle transducer and specially designed transducers such as a "comb" transducer. In the first, a standard transducer is positioned at a predetermined angle to the tests object and a wave injected. Since the transducer element is not in contact with the test object due to the incidence angle, a conducting medium such as plastic or water must be added to transfer the sound from the transducer element to the test object.

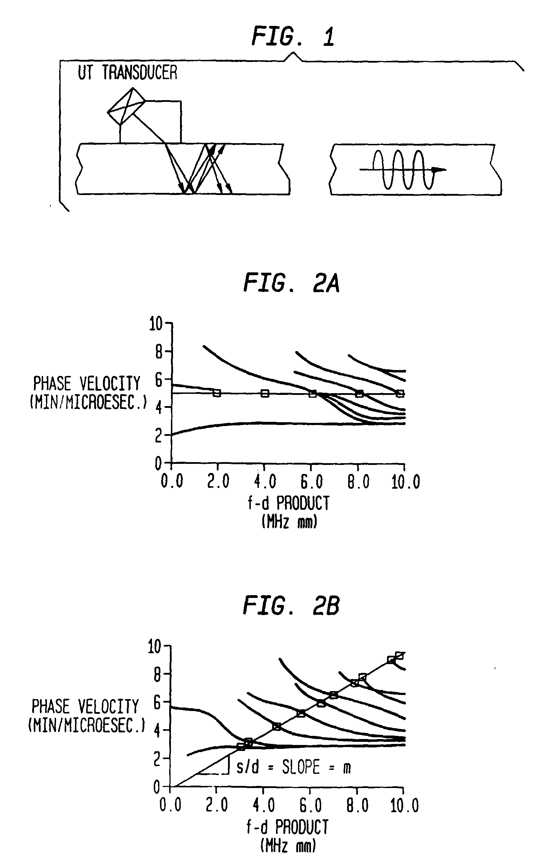

Referring to Figure 1, depicting the generation of a guided wave at an oblique incidence in a thin wall tube using a longitudinal wave transducer on an acoustic coupling material such as plastic. The longitudinal wave is incident at some incident angle $\Theta$, and velocity $V_{plexi}$. Due to Snell's law, the waves undergo mode conversion, reflection and refraction at the interfaces. At some distance away from the transducer, the waves will no longer be individually identifiable, but will superimpose into a wave packet.

For certain cases of incident angle, thickness, and material properties, constructive interference will take place, and a guided wave will propagate in the tube or plate. These conditions for constructive interference are met for many combinations of thickness, angle, and material properties. The combinations which result in constructive interference are termed modes. Each mode has its own characteristics of wave structure, propagation velocity, and stress distribution. In particular, each mode has an in plane and out of plane displacement at the wave guide surface. The amount of out of plane displacement dictates how "leaky" the mode will be since the out of plane displacement causes the generation of longitudinal waves out of the material and which carry energy out of the wave guide.

The theoretical modeling of guided wave propagation results in dispersion curves and wave structure diagrams that describe the wave propagation. A phase velocity dispersion curve is typically used for generation criterion for guided waves. In the case of oblique incidence generation, the phase velocity is simply related to angle of incidence by Snell's law:

$$\frac{Sin\Theta_1}{V_{phase}} = \frac{Sin\,90}{V_{phase}}.$$

A group velocity dispersion curve provides the propagation velocity of the generated guided waves modes.

As stated above, inducing guided waves by oblique incidence, longitudinal wave excitation is accomplished by coupling a longitudinal wave transducer to a steam generator tube at an incident angle through the use of a plastic wedge. A specific phase velocity is generated which is governed by Snell's Law for the plastic wedge. Therefore, modes can be generated which intercept the particular phase velocity excitation zone. Figure 2A shows the excitation zone for this type of method.

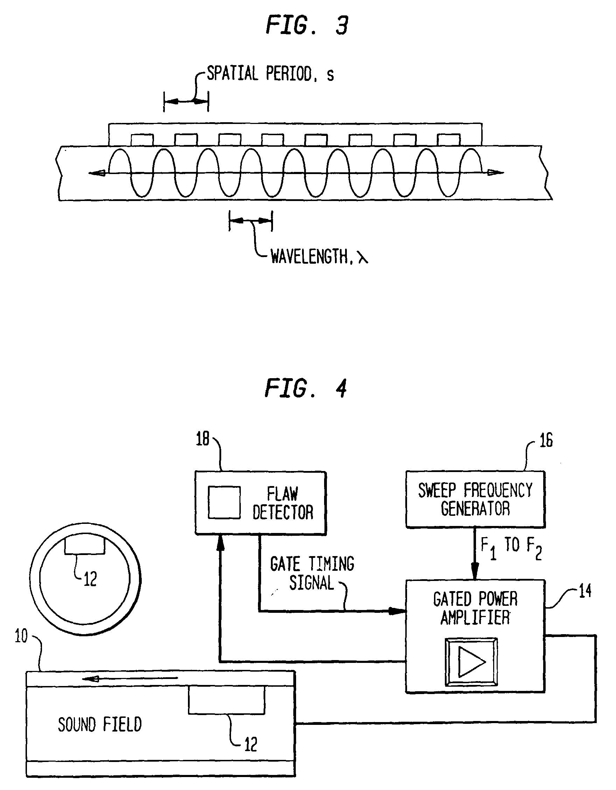

A second way of inducing guided waves in an object is the "comb" method. A comb transducer is a contact type transducer for producing guided waves and whose characteristics are determined by the spacing and thickness of the comb elements. In this method, excitation is accomplished by a periodic distribution of normal excitations with the spatial period equaling the wavelength of the excited mode (Figure 3). Instead of a horizontal excitation region as in the oblique incidence method (Figure 2A), the excitation is in the form of a straight line passing through the origin (Figure 2B). The equation of the line is of the form $y=mx$, where $y=V_{phase}$, $x=fd$, and $m=s/d$ and where

$$V_{phase} = f\lambda = fs = \frac{s}{d} fd,$$

and s is the comb spacing. Figure 2B is a graphical representation of the phase velocity excitation zone for this type of method.

Although either method of generation can be used for flaw detection such as in the detection of failure of the tube by a breach, or fretting, wear or defects, because comb transducers can be manufactured with a lower profile design, they provide means for obtaining access into the interior of steam generator tube for generating guided waves in the tubes. Comb transducers can be manufactured with varying degrees of spacing and element thickness to generate the desired mode in a variety of material thickness and properties.

An advantage of a comb type of transducer is that it can be made to fit into the small diameter of steam generator tubing and still maintain its characteristics. Due to its small thickness, the comb transducer is the best practical method of introducing guided waves into steam generator tubes.

The comb transducer is designed to produce guided waves in the steam generator tubes that have a longitudinal phase velocity that is "non-leaky" to both the tube inner surface and outer surface, i.e. the guided wave remains within the tube wall. This provides for maximum sensitivity and minimum attenuation.

In tubes, both axisymetric and non-axisymetric guided waves can propagate. Axisymetric guided waves refer to modes where the particle motion is only in longitudinal and radial directions and have uniform distributions of stress and particle motion around the tube. This can be accomplished by using a fully encircling comb transducer. Non-axisymetric guided waves have torsional components as well as longitudinal and radial components to the particle motion and have non-uniform distribution of stress and particular motion around the tube.

There are two inspection modes utilizing comb type transducers, "loaded" and "partially loaded". In a loaded application, the transducer fully encompasses the inner surface of the tube. This is the optimum test in that the transducer generates a uniform (axisymetric) sound field that travels in both directions (i.e. axially and circumferentially) in the tube and gives the maximum sensitivity. In a partially loaded test, only a segment of the transducer contacts the test object. This is less than optimum in that it produces a non-axisymetric sound field circumferentially and axially along the tube. This non-axisymetric sound field has limited inspection value due to the nonuniformity of the sound field at any specific location. Because of the difficulty of having a fully loaded comb transducer, full radial contact with the tube interior surface, only partial loading sources can be used such as a section of a comb transducer which will produce non-axisymetric waves. This is not a problem because the transducer physical characteristics (e.g. number of comb teeth, loading area etc.,) and fundamental frequency parameters can be optimized to generate the maximum sound field at the desired location. Changes to the location and intensity of the sound field are most sensitive to frequency changes.

The method of inspecting steam generator tubes to detect failure or a breach in the tubing comprises using a partially loaded, tone burst activated, ultrasonic comb transducer that is placed in one end of the steam generator tube opening located in the steam generator tube sheet. By selecting the comb gaps and thickness, the transducer produces a field intensity at a specific axial and circumferential distance along the tube.

Sound field characteristics are heavily dependent on frequency, when the properties of the test object are constant such as in steam generator tubes. To further increase the effectiveness of the inspection technique, the tone burst excitation would be "swept" through a specific frequency band causing the sound field to change in intensity axially and circumferentially around the length of the tube being inspected. The use of a swept frequency tone burst generator as a transducer excitation source permits the entire region of the tube to be inspected from one location without the need for generating axisymetric waves from a fully encircling comb transducer or moving the transducer along the full length of the tube. Defects within the steam generator tube reflects part of the guided wave signal received by the comb transducer operating in the pulse-echo mode. The amplitude of the reflected signal is proportional to the facial area of the defect. Thus, the use of swept frequency would permit the sound field to inspect the full internal surface area of the tube by the sound field changing in accordance with the sweep frequency.

The introduction of a second partially loaded tone burst activated ultrasonic comb transducer offset either circumferentially and/or axially from the first can be used to further guide and form the peak ultrasonic sound field by generating a second field that would constructively reinforce the sound field at the desired location(s). As described above, a property of resultant nonaxisymetric guided wave sound field is mainly determined by variables which include phase velocity, test part thickness, test part material properties, and operating frequency. A second nonaxisymetric sound field whose phase velocity and position were initiated to cause constructive field interference at the desired location with the sound field generated by the first transducer is produced by the use of swept frequency excitation and phased triggering and which permits rapid and complete inspection of the entire tube length without requiring movement of either transducer. To increase the sensitivity to defect detection, both transducers can be operated in pulse/echo mode and data from both could contain valid defect data.

In accordance with one embodiment of the present invention, a steam generator tube inspection system consists of a comb transducer 12 formed to the contour of the inner circumference of the steam generator tube 10 under inspection, a gated tone burst power amplifier 14, a sweep frequency generator 16, and a ultrasonic flaw detector 18 (Figure 4). Operationally, the limits of the sweep frequencies would be selected to maintain the sound field in the material to the maximum extent possible. If the tube is filled with liquid, the frequency limits are more constrained than if the tube was in air, due to the acoustic impedance differences which would cause leakage.

In another embodiment of the present invention two (or more) partially loaded comb transducers 22, 24 would be mounted on the interior of the steam generator tube 10 where the second partially loaded ultrasonic transducer 24 is offset either circumferentially and/or axially from the first transducer 22. As stated above, by so generating a second field, it constructively reinforces the sound field at the desired location and thereby further guides and forms the peak ultrasonic sound field.

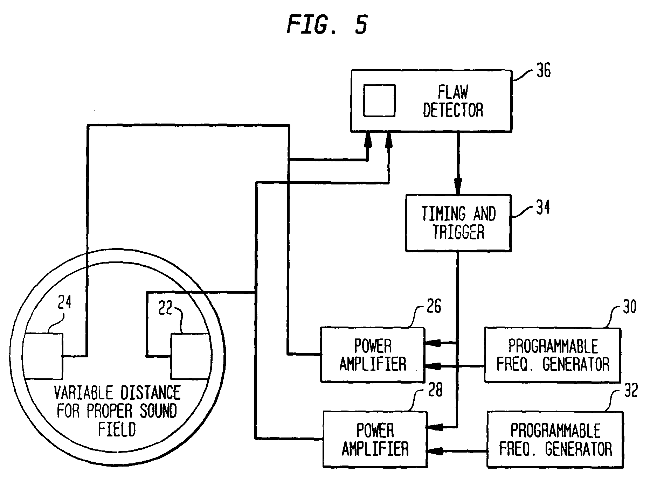

Additional components would include gated tone burst power amplifiers 26, 28, sweep frequency generators 30,32, timing and trigger networks 34, and a flaw detector 36 (Figure 5). As with the previous embodiment, the changes in transducer excitation frequency generate different geometric sound field patterns. Additionally, the use of trigger timing circuits further aid in "steering" the bounded sound field using constructive and destructive interference patterns generated by the phase velocity differences ($\Delta f$) and time delays ($\Delta t$) in much the same way as phased array ultrasonic transducers.

Using this technique, the useable sound field can be "programmed" to virtually any axial and circumferential position desired.

While the foregoing description and drawings represent the preferred embodiments of the present invention, it will be apparent to those skilled in the art that various changes and modifications may be made therein without departing from the true spirit and scope of the present invention.

## Claims

1. A method of inspecting a steam generator tube within a steam generator to detect damage, flaws, corrosion, wall thinning, or breach, comprising the steps of:

   (a) placing in an open end of the steam generator tube and in contact with an inner wall of the steam generator tube a first partially loaded, tone burst activated, comb ultrasonic transducer;
   (b) transmitting a first nonaxisymetric ultrasonic wave into the steam generator tube using the first partially loaded transducer;
   (c) detecting a first reflected ultrasonic wave from the steam generator tube which reflected ultrasonic wave is indicative of a variation from a predetermined steam generator tube wall thickness.

2. The method of claim 1 wherein the step of transmitting a first nonaxisymetric ultrasonic wave includes a swept frequency tone burst generator as an excitation source for sweeping the first transmitted wave through a predetermined frequency band to cause the first reflected ultrasonic wave to change in intensity axially and circumferentially along a length of the steam generator tube being inspected.

3. The method of claim 2 wherein the step of detecting a first reflected ultrasonic wave is performed by the first partially loaded, tone burst activated comb ultrasonic transducer operating in a pulse-echo mode.

4. The method of claim 1 wherein the step of placing in an open end of the steam generator tube a first partially loaded tone burst activated comb ultrasonic transducer further includes a second partially loaded tone burst activated comb ultrasonic transducer in contact with an inner wall of the steam generator tube and displaced circumferentially from the first partially loaded ultrasonic comb transducer, and wherein the step of transmitting a first nonaxisymetrical ultrasonic wave further includes transmitting a second nonaxisymetrical ultrasonic wave into the steam generator tube using the second partially loaded transducer so that the second reflected ultrasonic wave constructively reinforces the first reflected ultrasonic wave.

5. The method of claim 1 wherein the step of placing in an open end of the steam generator tube a first partially loaded tone burst activated comb ultrasonic transducer further includes a second partially loaded tone burst activated comb ultrasonic transducer in contact with an inner wall of the steam generator tube and displaced axially from the first partially loaded ultrasonic comb Transducer, and wherein the step of transmitting a firsst nonaxisymetrical ultrasonic wave further includes transmitting a second nonaxisymetrical ultrasonic wave into the steam generator tube using the second partially loaded transducer so that the second ultrasonic wave constructively reinforces the first ultrasonic wave.

6. The method of claim 3 wherein the step of placing in an open end of he steam generator tube a first partially loaded tone burst activated comb ultrasonic transducer further includes a second partially loaded tone burst activated comb ultrasonic transducer in contact with an inner wall of the steam generator tube and displaced axially and circumferentially from the first partially loaded ultrasonic comb transducer, and wherein the step of transmitting a first nonaxisymetrical ultrasonic wave further includes transmitting a second nonaxisymetrical ultrasonic wave into the steam generator tube using the second partially loaded transducer so that the second ultrasonic wave constructively reinforces the first ultrasonic wave.

7. The method of claim 6 wherein the step of transmitting a first ultrasonic wave and a second ultrasonic wave further includes sweeping the second transmitted wave through the predetermined frequency band by the swept frequency tone burst generator and further includes the step of phase triggering.

8. The method of claim 7 wherein the step of detecting a first reflected ultrasonic wave further includes detecting a second reflected ultrasonic wave by the second partially loaded tone burst activated comb ultrasonic transducer and both the first ultrasonic transducer and the second ultrasonic transducer operate in a pulsed-echo mode.

## FIG. 1

UT TRANSDUCER

## FIG. 2A

PHASE VELOCITY
(MIN/MICROESEC.)

f-d PRODUCT
(MHz mm)

## FIG. 2B

PHASE VELOCITY
(MIN/MICROESEC.)

s/d = SLOPE = m

f-d PRODUCT
(MHz mm)

# FIG. 3

SPATIAL PERIOD, s

WAVELENGTH, λ

# FIG. 4

FLAW DETECTOR — 18

SWEEP FREQUENCY GENERATOR — 16

$F_1$ TO $F_2$

GATE TIMING SIGNAL

GATED POWER AMPLIFIER — 14

12

10

SOUND FIELD

12

# FIG. 5

FLAW DETECTOR — 36

TIMING AND TRIGGER — 34

POWER AMPLIFIER — 26

PROGRAMMABLE FREQ. GENERATOR — 30

POWER AMPLIFIER — 28

PROGRAMMABLE FREQ. GENERATOR — 32

24

22

VARIABLE DISTANCE FOR PROPER SOUND FIELD